# FASCICULE DE BREVET EUROPEEN

(11) **EP 3 320 604 B1**
(45) Date de publication et mention de la délivrance du brevet: **02.03.2022**
(21) Numéro de dépôt: 16745796.9
(22) Date de dépôt: 07.07.2016
(51) Int. Cl.: H02K 7/00

(54) **MACHINE ÉLECTRIQUE TOURNANTE MUNIE D'UN MOYEN DE RÉGLAGE DE LA POSITION ANGULAIRE DE L'ARBRE**
DREHENDE ELEKTRISCHE MASCHINE MIT VORRICHTUNG ZUM EINSTELLEN DER WINKELPOSITION DER WELLE
ROTARY ELECTRIC MACHINE EQUIPPED WITH A MEANS OF ADJUSTING THE ANGULAR POSITION OF THE SHAFT

(30) Priorité: 10.07.2015 FR 1556542
(43) Date de publication de la demande: 16.05.2018
(73) Titulaire: Valeo Equipements Electriques Moteur, 94046 Créteil Cedex (FR)
(72) Inventeur: ROUIS, Oussama, 94000 Creteil (FR); LABROSSE, Jean-Claude, 94220 Charenton Le Pont (FR); LEDIEU, Cédric, 94160 Saint-Mande (FR)
(74) Mandataire: Valeo Powertrain Systems
(86) Numéro de dépôt international: PCT/FR2016/051724
(87) Numéro de publication internationale: WO 2017/009547

(56) Documents cités:
- DE-A1- 10 318 972
- FR-A1- 2 740 853
- FR-A1- 2 898 739
- US-A- 6 087 744
- US-A1- 2006 005 645
- US-A1- 2010 283 339

## Description

La présente invention porte sur une machine électrique tournante munie d'un moyen de réglage de la position angulaire de l'arbre. L'invention trouve une application particulièrement avantageuse, mais non exclusive, avec les machines électriques réversibles de forte puissance pouvant fonctionner en mode alternateur et en mode moteur.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre par exemple par l'intermédiaire de roulements. Le rotor comporte un corps formé par un empilage de feuilles de tôles maintenues sous forme de paquet au moyen d'un système de fixation adapté, tel que des rivets traversant axialement le corps du rotor de part en part. Le rotor comporte des pôles formés par exemple par des aimants permanents logés dans des cavités ménagées dans la masse magnétique du rotor, comme cela est décrit par exemple dans le document EP0803962. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un pont redresseur de tension.

Dans le cadre de l'hybridation des véhicules automobiles, une machine électrique tournante réversible de forte puissance peut être intégrée dans différents éléments de la chaîne de traction. La machine peut ainsi être accouplée à une boîte de vitesses, un embrayage, ou un différentiel du véhicule. La machine électrique est alors apte à fonctionner dans un mode alternateur pour fournir notamment de l'énergie à la batterie et au réseau de bord du véhicule, et dans un mode moteur, non seulement pour assurer le démarrage du moteur thermique, mais également pour participer à la traction du véhicule seule ou en combinaison avec le moteur thermique.

Les documents DE 10318972 A1, US 2010/283339 A1, US 2006/005645 A1, FR 2740853 A1, FR 2898739 A1 et US 6087744 A présente des machines électriques de l'état de la technique.

L'invention vise à faciliter le montage de la machine électrique à l'intérieur de l'élément hôte accouplé mécaniquement à la machine. A cet effet, l'invention est définie par la revendication indépendante 1 et propose une machine électrique tournante, notamment pour véhicule automobile, comportant :
- un stator et un rotor montés à l'intérieur d'un carter,
- un circuit de refroidissement agencé pour permettre notamment l'écoulement d'un liquide de lubrification et/ou de refroidissement, par exemple une huile, à l'intérieur de la machine électrique tournante, - un arbre comportant :
- à sa première extrémité un organe d'accouplement comportant un pignon notamment pour l'accouplement de ladite machine électrique tournante avec un pignon correspondant d'un élément hôte, et
- à sa deuxième extrémité une portion de réglage agencée pour permettre un entraînement en rotation dudit arbre, notamment lors d'une insertion de ladite machine électrique tournante dans une enveloppe dudit élément hôte, le carter comportant un organe d'indexation agencé pour permettre l'indexation angulaire de ladite machine électrique tournante dans une position prédéterminée lors de son insertion dans ladite enveloppe dudit élément hôte destiné à être accouplé avec ladite machine électrique tournante.

On précise que l'entraînement de l'arbre via la portion de réglage réalisée par exemple dans la face latérale cylindrique de l'arbre est distinct de l'entraînement réalisé par les composants actifs de la machine et distinct de l'entraînement pouvant être réalisé par un élément extérieur accouplé à la machine via l'organe d'accouplement. Cet entraînement via la portion de réglage est destiné à être réalisé à l'aide d'un outil externe par rapport au carter de la machine qui est manipulé par un opérateur et, le cas échéant, par un robot en chaîne de montage.

L'invention permet ainsi de réaliser un positionnement angulaire sous contrôle de l'arbre, en particulier pour s'assurer d'un accouplement mécanique avec l'élément hôte, par exemple par engrènement entre un pignon porté par l'arbre de la machine et un pignon correspondant de l'élément hôte.

Selon une réalisation, le stator entoure le rotor.

Selon une réalisation, le rotor est monté sur l'arbre.

Selon une réalisation, ladite portion de réglage s'étend en saillie par rapport au carter de la machine. Cela permet l'accès de cette portion par un outillage alors que la machine est montée dans l'élément hôte.

Selon une réalisation, ladite portion de réglage comporte au moins un méplat. Alternativement, la portion peut être en saille par rapport à la portion portée par le roulement.

Selon une réalisation, ladite portion de réglage comporte une pluralité de méplats, notamment entre deux et six méplats.

Selon une réalisation, ladite portion de réglage comporte une creusure notamment axiale, disposée dans la face latérale de l'arbre, configurée pour permettre l'entraînement en rotation dudit arbre. La creusure pourra par exemple présenter une section de forme polygonale ou toute autre forme adaptée à l'application.

Selon une réalisation, ladite portion de réglage comporte un trou s'étendant transversalement par rapport audit arbre apte à recevoir une goupille de forme correspondante.

L'invention permet le montage d'une machine électrique refroidie par un liquide de lubrification, lorsqu'elle est destinée à être intégrée dans un des éléments de la chaîne de traction d'un véhicule automobile.

Selon une réalisation, le circuit de refroidissement est agencé pour refroidir le rotor et/ou le stator.

Selon une réalisation, ledit arbre est configuré pour qu'un liquide de lubrification, tel que de l'huile puisse circuler à l'intérieur de celui-ci pour lubrifier et/ou refroidir ladite machine électrique tournante.

Selon une réalisation, le carter comprend un élément de guidage axial de ladite machine électrique tournante notamment lors de son insertion dans ladite enveloppe dudit élément hôte, et un élément de centrage de ladite machine électrique tournante par rapport à ladite enveloppe dudit élément hôte.

Selon une réalisation, le carter comporte un organe d'indexation agencé pour permettre l'indexation angulaire de ladite machine électrique tournante dans une position prédéterminée notamment lors de son insertion dans l'enveloppe dudit élément hôte destiné à être accouplé avec ladite machine électrique tournante.

Selon une réalisation, ladite machine électrique tournante comporte une pluralité de canaux s'étendant entre ledit stator et ledit carter, et en ce que ledit carter comporte une pluralité d'ouvertures débouchant chacune par une de leurs extrémités à l'extérieur de ladite machine électrique tournante et par une autre de leurs extrémités dans un canal.

Selon une réalisation, le carter comporte des paliers avant et arrière assemblés ensemble.

Selon une réalisation, le palier avant comprend une paroi transversale, un nez s'étendant en saillie par rapport à la paroi transversale et une paroi cylindrique s'étendant depuis la périphérie externe de la paroi transversale.

Selon une réalisation, la pluralité de canaux s'étend entre le stator et la paroi cylindrique.

Selon une réalisation, le carter définit une paroi cylindrique, et la machine comporte une pluralité de canaux s'étendant entre le stator et la paroi cylindrique du carter.

Selon une réalisation, le carter comporte une pluralité d'ouvertures débouchant chacune par une de leurs extrémités à l'extérieur de ladite machine électrique tournante et par une autre de leurs extrémités dans un canal de la pluralité de canaux.

Selon une réalisation, une puissance de la machine pourra être comprise entre 10kW et 50kW.

Selon une réalisation, un diamètre extérieur du rotor est compris entre 8 et 14 cm, notamment entre 10 et 12 cm, et vaut de préférence 11 cm.

Selon une réalisation, un diamètre extérieur du stator est compris entre 10 et 20 cm, notamment entre 13 et 18 cm, et vaut de préférence 15 cm.

Selon une réalisation, la machine comporte un circuit de refroidissement agencé pour permettre notamment l'écoulement d'un liquide de refroidissement, par exemple une huile, entre le carter et le stator.

Selon une réalisation, le circuit de refroidissement est agencé pour permettre l'écoulement d'un liquide de refroidissement dans un alésage axial réalisé dans l'arbre.

L'invention a également pour objet un ensemble caractérisé en ce qu'il comporte une enveloppe d'un élément hôte et une machine électrique tournante telle que précédemment définie insérée dans ladite enveloppe.

Selon une réalisation, l'élément hôte comporte un pignon pour l'accouplement avec le pignon correspondant de la machine électrique tournante.

Selon une réalisation, l'élément hôte est un élément d'une chaîne de traction d'un véhicule automobile, par exemple une boîte de vitesses, ou un différentiel, ou un embrayage.

Les caractéristiques ci-dessus sont applicables seules ou en combinaison à cette invention.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'une machine électrique tournante selon la présente invention;
La figure 2 est une vue en coupe longitudinale d'une machine électrique tournante selon la présente invention sans les parties actives installée à l'intérieur d'un élément hôte;
Les figures 3a et 3b représentent des vues en perspective de la machine électrique tournante selon la présente invention suivant différents angles;
La figure 4 est une vue de face de la machine électrique tournante selon la présente invention;
La figure 5 est une vue en coupe partielle de la machine électrique tournante selon la présente invention;
La figure 6 est une vue en perspective montrant le palier arrière de la machine électrique tournante selon la présente invention;
Les figures 7a et 7b sont respectivement des vues en couple longitudinale et en perspective illustrant le sens de circulation du liquide de refroidissement à l'intérieur de la machine électrique tournante selon la présente invention.

Les éléments identiques, similaires, ou analogues conservent la même référence d'une figure à l'autre. Dans la suite de la description, on considère qu'un élément "avant" est situé du côté de l'organe d'accouplement de la machine, tel qu'un pignon ou une poulie, avec l'élément hôte et qu'un élément "arrière" est situé du côté opposé.

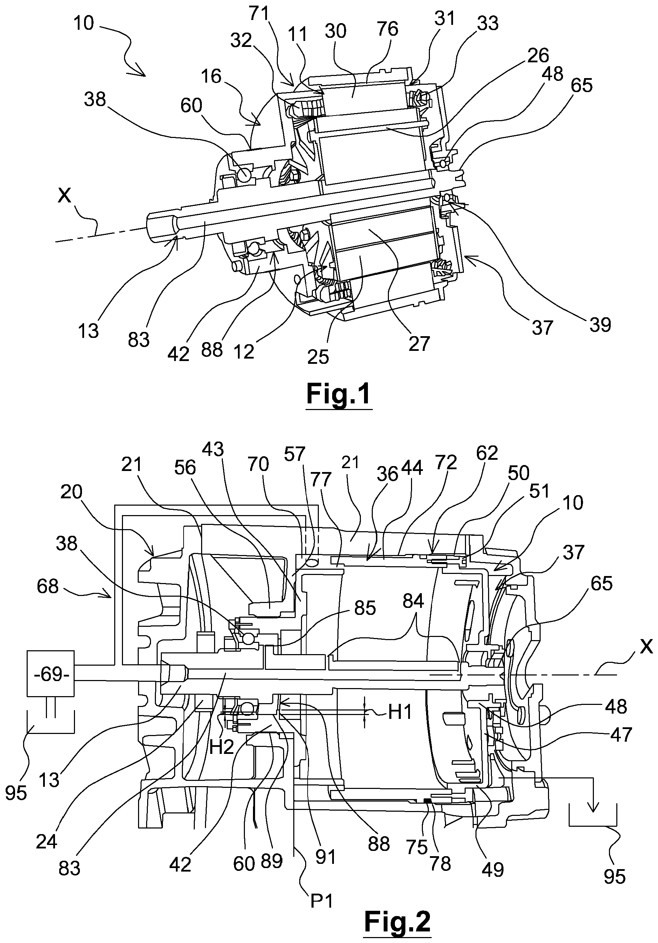

La figure 1 montre une machine électrique tournante 10 comportant un stator polyphasé 11 entourant un rotor 12 d'axe X monté sur un arbre 13. Le stator 11 est porté par un carter 16 configuré pour porter à rotation l'arbre 13. Le stator 11 entoure le rotor 12 avec présence d'un entrefer entre la périphérie interne du stator 11 et la périphérie externe du rotor 12.

Cette machine électrique 10 est destinée à être installée à l'intérieur d'une enveloppe 21 d'un élément hôte 20 visible en figure 2 appartenant à une chaîne de traction de véhicule automobile. L'élément hôte 20 destiné à être accouplé mécaniquement avec la machine électrique 10 pourra par exemple prendre la forme d'un embrayage, d'une boîte de vitesses, ou d'un différentiel. A cet effet, l'arbre 13 porte à une de ses extrémités un organe d'accouplement 24, tel qu'un pignon, destiné à engrener avec un pignon correspondant (non représenté) de l'élément hôte 20 afin d'assurer une transmission de couple entre les deux éléments. Le pignon 24 pourra être un pignon rapporté monté sur l'arbre 13 ou un pignon d'un autre type. En variante, l'organe d'accouplement 24 pourra consister en une poulie destinée à coopérer avec une courroie.

La machine 10 est apte à fonctionner dans un mode alternateur pour fournir notamment de l'énergie à la batterie et au réseau de bord du véhicule, et dans un mode moteur pour participer à la traction du véhicule seule ou en combinaison avec le moteur thermique.

Plus précisément, le rotor 12 comporte un corps 25 formé par un empilage de feuilles de tôles. Ces feuilles de tôles sont maintenues sous forme de paquet de tôles au moyen d'un système de fixation 26 adapté, tel que des rivets traversant axialement le rotor 12 de part en part. Des aimants permanents 27 sont implantés dans des ouvertures du corps. Les aimants 27 pourront être en terre rare ou en ferrite selon les applications et la puissance recherchée de la machine 10. Alternativement, les pôles du rotor 12 pourront être formés par des bobines.

Par ailleurs, le stator 11 comporte un corps 30 en forme de paquet de tôles doté d'encoches, par exemple du type semi-fermées, équipées d'isolant d'encoches pour le montage du bobinage 31 du stator 11. Le bobinage 31 comporte un ensemble d'enroulements de phase traversant les encoches du corps du stator 11 et formant des chignons avant 32 et arrière 33 s'étendant en saillie de part et d'autre du corps 30 du stator 11. Les enroulements de phase sont obtenus ici à partir d'éléments conducteurs en forme d'épingles reliées entre elles par exemple par soudage. Ces enroulements sont par exemple des enroulements triphasés connectés en une ou plusieurs étoiles ou bien en un ou plusieurs triangles. Les sorties des enrouements de phase sont reliées à un pont commutateur et/ou redresseur et/ou à un onduleur comportant des diodes ou des transistors du type MOSFET, notamment lorsqu'il s'agit d'une machine 10 réversible.

Le carter 16 comporte des paliers avant 36 et arrière 37 assemblés ensemble. Les paliers 36 et 37 sont de forme creuse et portent chacun en leur centre, un roulement à billes 38, 39 pour le montage à rotation de l'arbre 13. Alternativement, le roulement est un roulement magnétique. Plus précisément, le palier avant 36 comprend un nez 42 s'étendant en saillie par rapport à une paroi transversale 43. Une paroi 44 de forme cylindrique s'étend depuis la périphérie externe de la paroi transversale 43. Par ailleurs, le palier arrière 37 comporte une paroi transversale 47 comportant un trou traversant en son centre pour autoriser le passage de l'arbre 13 et munie d'une portée annulaire 48 destinée à supporter la bague externe du roulement arrière 39. Le palier arrière 37 comporte également une paroi cylindrique 49 s'étendant depuis une périphérie externe de la paroi transversale 43.

Le palier arrière 37 est fixé au palier avant 36 au moyen d'organes de fixation 51, tels que des vis ou des rivets, traversant des ouvertures réalisées dans un rebord annulaire 50 issu de la paroi 49 pour coopérer avec des alésages ménagés dans l'épaisseur de la paroi cylindrique 44 du palier avant 36 (cf. figure 2).

En l'occurrence, le nez 42 est destiné à coopérer avec un manchon 56 creux de forme correspondante issu d'une paroi 57, notamment transversale interne, de l'enveloppe 21. Le nez 42 forme un élément de guidage axial de la machine 10 par rapport à l'élément hôte 20, lors de son insertion à l'intérieur du manchon 56. Le positionnement axial de la machine 10 à l'intérieur de l'enveloppe 21 est contrôlé par la surface externe de la paroi transversale 43 du palier avant 36 constituant une butée axiale destinée à venir en appui contre la paroi transversale 57 correspondante de l'enveloppe 21. La surface formant butée est contenue dans un plan P1 perpendiculaire par rapport à l'axe X de la machine 10.

En outre, le nez 42 forme un élément de centrage de la machine 10 par rapport à l'enveloppe 21 de l'élément hôte 20. A cet effet, le nez 42 comporte en périphérie externe une surface ajustée 60 par rapport au manchon 56, par exemple par un ajustement compris entre 1/100 et 3/100 de millimètre, par exemple de type H7g6. Une section du nez 42 perpendiculaire à l'axe du carter 16 (correspondant à l'axe X) coupant la surface ajustée 60 présente une surface supérieure strictement à une surface d'une autre section du nez 42.

Le nez 42 comporte une paroi de forme cylindrique délimitant un espace autorisant le passage de l'arbre 13. Le nez 42 porte en outre la bague externe du roulement avant 38 coopérant avec une surface de portée correspondante ménagée dans la périphérie interne du nez 42. En outre, la surface de la plus grande section du nez 42 est inférieure strictement à toute surface d'une section de la machine 10 contenue dans un plan perpendiculaire à l'axe X de la machine 10 coupant le stator 11. Autrement dit, le plus grand diamètre externe du nez 42 situé au niveau de la surface ajustée 60 est inférieur au diamètre externe de toute autre partie du palier avant 36 ou du palier arrière 37.

En variante, les fonctions de guidage et de centrage la machine 10 sont dissociées et réalisées par deux éléments distincts.

Une deuxième portion 62 du palier avant 36 assure également le centrage de la machine 10 par rapport à l'enveloppe 21. En l'occurrence, cette deuxième portion 62 est constituée par une partie de la paroi cylindrique 44 du palier avant 36 située au niveau de la liaison entre les deux paliers 36, 37. Cette portion 62 comporte une surface ajustée par rapport à une face cylindrique interne correspondante de l'enveloppe 21, par exemple par un ajustement compris entre 1/100 et 3/100 de millimètre, par exemple de type H7g6.

Ainsi, en se déplaçant depuis l'extrémité avant vers l'extrémité arrière de la machine 10, on rencontre successivement le nez 42 dans lequel est monté le roulement avant 38, le chignon avant 32, une extrémité axiale avant du stator 11 et la deuxième portion de centrage 62, puis le roulement arrière 39.

Alternativement, une portion de centrage de la paroi cylindrique 49 du palier arrière 37 assure le centrage de la machine 10 par rapport à l'enveloppe 21. Cette portion comporte une surface ajustée par rapport à une face cylindrique interne correspondante de l'enveloppe 21, par exemple par un ajustement compris entre 1/100 et 3/100 de millimètre, par exemple de type H7g6. Ainsi, selon cette variante, en se déplaçant depuis l'extrémité avant vers l'extrémité arrière de la machine 10, on rencontre successivement le nez 42 dans lequel est monté le roulement avant 38, le chignon avant 32, une extrémité axiale avant du stator 11 et la portion de centrage de la paroi cylindrique du palier arrière, puis le roulement arrière 39.

L'arbre 13 comporte dans sa partie centrale des cannelures pour son emmanchement à force à l'intérieur de l'alésage central du corps de rotor 25. En outre, du côté de l'extrémité opposée de l'organe d'accouplement 24, une portion de réglage 65 permet un entraînement en rotation de l'arbre 13 lors de l'insertion de la machine 10 dans l'enveloppe 21. On facilite ainsi l'accouplement de la machine 10 avec l'élément hôte 20 en permettant, par rotation de l'arbre 13 via la portion 65, l'insertion des dents du pignon 24 porté par l'arbre 13 entre les espaces des dents du pignon correspondant de l'élément hôte 20.

La portion de réglage 65 s'étend en saillie par rapport au carter 16. La portion de réglage 65 comporte au moins un méplat destiné à coopérer avec un outil de forme correspondante. Cet outil pourra être manipulé manuellement par un opérateur ou, le cas échéant, automatiquement par un robot en chaîne de montage. Avantageusement, la portion de réglage 65 comporte une pluralité de méplats, notamment entre deux et six méplats.

Alternativement, la portion de réglage 65 comporte une creusure notamment axiale, disposée dans la face latérale de l'arbre 13, configurée pour permettre l'entraînement en rotation de l'arbre 13. La creusure pourra par exemple présenter une section de forme polygonale ou toute autre forme adaptée à l'application. En variante, la portion de réglage 65 comporte un trou s'étendant transversalement par rapport audit arbre 13 apte à recevoir une goupille de forme correspondante.

Par ailleurs, comme on peut le voir sur la figure 2, la machine électrique 10 est refroidie au moyen d'un circuit de refroidissement 68 agencé pour permettre notamment l'écoulement d'un liquide de refroidissement, en l'occurrence de l'huile, entre le carter 16 et le corps de stator 30, dans la direction de l'axe X.

A cet effet, le circuit de refroidissement 68 comporte une pompe 69 permettant d'injecter du liquide de refroidissement dans une chambre de distribution 70. La chambre de distribution 70 de forme globalement annulaire est délimitée par une partie d'une face interne 72 de l'enveloppe 21 et une partie de la paroi 44 du palier avant 36.

Plus précisément, le palier avant 36 comporte, dans la paroi cylindrique 44, un décrochement périphérique 71 de diamètre réduit par rapport au reste de la paroi cylindrique 44. La chambre 70 est délimitée par la face externe de ce décrochement 71 ainsi que par une face interne en vis-à-vis de l'enveloppe 21. La chambre 70 se prolonge au-delà du décrochement 71 dans un espace annulaire délimité par la périphérie externe de la portion cylindrique du palier avant 36 et la face interne 72 de l'enveloppe 21.

La chambre 70 est fermée hermétiquement du côté de son extrémité arrière par un joint 75 positionné à l'intérieur d'une gorge 78 ménagée dans la périphérie externe du palier avant 36. Du côté de l'extrémité avant, la surface externe de la paroi transversale 43 vient en appui contre une surface plane correspondante de la paroi transversale 57 de l'enveloppe 21 pour assurer l'étanchéité de la chambre 70.

La chambre 70 est en communication avec une pluralité de canaux 76 (cf. figure 1) s'étendant axialement entre le stator 11 et le carter 16 pour le passage du liquide de refroidissement. Ces canaux 76 sont répartis angulairement de manière régulière sur la circonférence du stator 11. Dans un exemple de réalisation, ces canaux 76 sont formés par des rainures managées dans une périphérie externe du corps de stator 11 et fermées radialement par la face interne du carter 16.

Pour assurer la communication fluidique entre la chambre 70 et les canaux 76, le carter 16 comporte une pluralité d'ouvertures 77 débouchant chacune par une de leurs extrémités à l'extérieur de la machine 10 dans la chambre de distribution 70 et par une autre de leurs extrémités du côté des canaux 76. La pluralité d'ouvertures 77 est répartie angulairement suivant un pourtour du carter 16.

Une surface de la section des différentes ouvertures 77 varie en fonction d'une position angulaire des ouvertures 77, de sorte que le liquide de refroidissement circule dans chaque canal 76 avec sensiblement la même pression. Ainsi, plus on s'éloigne de la zone d'injection d'huile 80 à l'intérieur de la chambre 70, plus la surface des sections des différentes ouvertures 77 augmente. Ainsi, sur une ouverture angulaire d'au moins 100 degrés, notamment de 180 degrés, les ouvertures 77 présentent une section croissante.

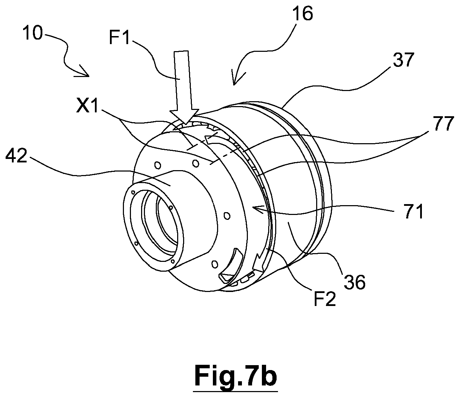

Les ouvertures 77 présentent chacune un axe X1 (cf. figure 7b) s'étendant parallèlement à l'axe X de la machine 10 correspondant à la direction d'écoulement du liquide de refroidissement à l'intérieur des canaux 76. De préférence, une direction d'injection d'huile suivant la flèche F1 est inclinée par rapport à l'axe X1 des ouvertures 77, par exemple d'un angle d'au moins 40°. Le liquide dans la chambre de distribution 70 est sous pression et circule de préférence à un débit compris entre 3 et 11 Litres/minute.

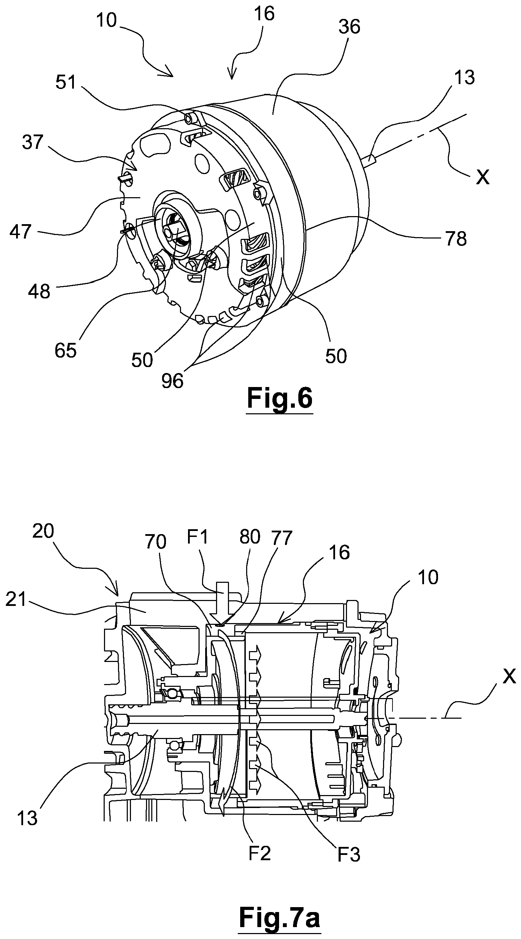

Ainsi, comme cela est illustré sur les figures 7a et 7b, l'huile injectée suivant la flèche F1 est réparties de manière homogène à l'intérieur des ouvertures 77 sur la circonférence de la chambre 77 suivant la flèche F2 pour s'écouler axialement à l'intérieur des canaux 76 suivant les flèches F3 sur la circonférence du stator 11 afin de refroidir efficacement la machine 10.

Comme on peut le voir sur la figure 1, l'huile circule également dans un alésage axial 83 réalisé dans l'arbre 13 du rotor 12 et dans des conduits 84 issus dudit alésage 83 débouchant vers les deux faces d'extrémité axiale du rotor 12. L'arbre 13 comporte également au moins une sortie d'huile 85 débouchant en face d'un réservoir 88 ménagé dans le carter 16.

Ce réservoir 88 est adapté à recevoir le liquide de refroidissement jouant également un rôle de lubrifiant pour assurer la lubrification du roulement avant 38. Lorsque la machine électrique 10 est montée dans un véhicule automobile, le réservoir 88 est positionné dans la partie basse de la machine 10 pour que le lubrifiant puisse être stocké dans le réservoir 88 par gravité.

Le réservoir 88 est configuré de façon à favoriser l'écoulement du surplus de lubrifiant en direction du roulement 38 lorsque le réservoir 88 est plein.

Le réservoir 88 est délimité par un fond 89, un premier rebord 91 formé une collerette annulaire d'orientation radiale qui est issue d'une périphérie interne du nez 42, et un deuxième rebord 92 formé par la bague externe du roulement 38. Une portion du roulement 38 est ainsi en contact fluidique avec le lubrifiant du réservoir 88, c'est-à-dire qu'au moins une partie du roulement 38 est en contact direct avec l'huile du réservoir 88. Le premier rebord 91 est configuré pour permettre l'écoulement du lubrifiant depuis le réservoir 88 vers le roulement 38, notamment par gravité, lorsque la machine 10 est montée dans l'élément hôte 20.

En l'occurrence, la hauteur H1 du premier rebord par rapport au fond 89 est supérieure à la hauteur H2 du deuxième rebord 92 par rapport au fond 89. Le fond 89 est légèrement surélevé par rapport à la surface de portée de la bague interne du roulement 38 et s'étend suivant sa largeur suivant une direction de l'axe X de la machine 10.

Afin de faciliter l'écoulement de l'huile à travers le roulement 38, le roulement 38 est dépourvu de flasque. En outre, le roulement 38 est de préférence préalablement dégraissé de manière à pouvoir être parcouru aisément par l'huile sans interférence avec la graisse qu'il contient par défaut et qui aura été retirée par précaution.

Le circuit de refroidissement 68 fonctionne en boucle fermée, de telle façon que l'huile est prélevée par la pompe 69 dans un réservoir externe 95 à la machine 10 et est récupérée après circulation dans la machine 10 dans ce réservoir 95.

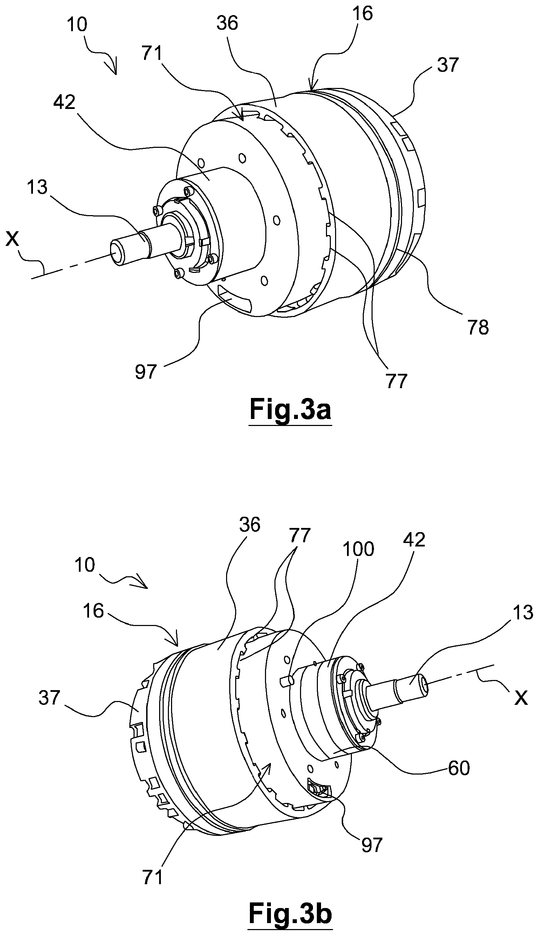

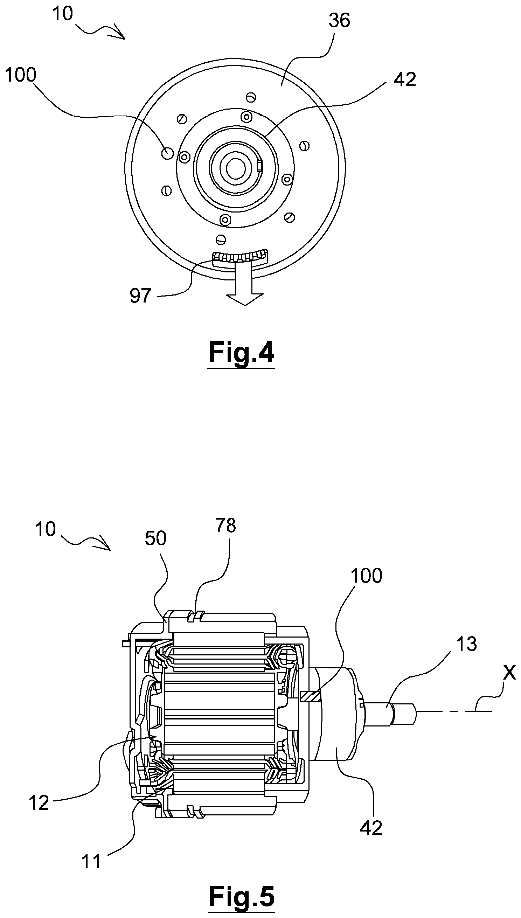

Pour autoriser l'huile à s'écouler dans le réservoir 95, le palier arrière 37 comporte des ouvertures 96 réparties sur sa circonférence et bien visibles sur la figure 6. Comme on peut le voir sur les figures 3a, 3b et 4, le palier avant 36 comporte également une ouverture 97 pour permettre une sortie d'huile vers le réservoir 95.

Afin de s'assurer que l'ouverture 97 est en position basse pour permettre l'écoulement du liquide par gravité via la sortie 97, le carter 16 comporte un organe d'indexation 100 agencé pour permettre l'indexation angulaire de la machine 10 par rapport à l'enveloppe 21 lors de son insertion dans l'enveloppe 21.

Dans l'exemple de réalisation, l'organe d'indexation 100 montré sur les figures 3b, 4, et 5 est constitué par un plot réalisé sur la paroi transversale 43 du palier avant 36. Ce plot 100 est agencé pour venir s'insérer dans un alésage de forme correspondante de l'élément hôte 20. Le plot 100 pourra être de type rapporté par rapport au carter 16 ou alternativement, venir de matière avec le carter 16. Le plot 100 est en outre configuré pour permettre le blocage en rotation de la machine 10. Le plot 100 présente à cet effet une section apte à contribuer à résister à au moins une partie des efforts développés par la machine électrique 10 en fonctionnement.

En variante, le liquide de refroidissement jouant également le rôle de lubrifiant pourra prendre la forme d'une émulsion d'huile et d'eau.

Selon une réalisation, une puissance de la machine 10 pourra être comprise entre 10kW et 50kW. Un diamètre extérieur du rotor 12 est compris entre 8 et 14 cm, notamment entre 10 et 12 cm, et vaut de préférence 11 cm. Un diamètre extérieur du stator 11 est compris entre 10 et 20 cm, notamment entre 13 et 18 cm, et vaut de préférence 15 cm.

Bien entendu, la description qui précède a été donnée à titre d'exemple uniquement et le domaine de l'invention est définie par la revendication indépendante 1.

## Revendications

1. Machine électrique tournante (10), notamment pour véhicule automobile, comportant :
- un stator (11) et un rotor (12) montés à l'intérieur d'un carter (16),
- un arbre (13) comportant :
- à sa première extrémité un organe d'accouplement (24) comportant un pignon notamment pour l'accouplement de ladite machine électrique tournante (10) avec un pignon correspondant d'un élément hôte (20), et
- à sa deuxième extrémité une portion de réglage (65) agencée pour permettre un entraînement en rotation dudit arbre (13), notamment lors d'une insertion de ladite machine électrique tournante (10) dans une enveloppe (21) dudit élément hôte (20),
le carter (16) comportant un organe d'indexation (100) agencé pour permettre l'indexation angulaire de ladite machine électrique tournante (10) dans une position prédéterminée lors de son insertion dans ladite enveloppe (21) dudit élément hôte (20) destiné à être accouplé avec ladite machine électrique tournante (10),
la machine électrique tournante étant **caractérisée en ce qu'**elle comprend
- un circuit de refroidissement agencé pour permettre notamment l'écoulement d'un liquide de lubrification et/ou de refroidissement, par exemple une huile, à l'intérieur de la machine électrique tournante (10).

2. Machine électrique tournante selon l'une des revendications précédentes, **caractérisée en ce que** ladite portion de réglage (65) s'étend en saillie par rapport au carter (16) de la machine.

3. Machine électrique tournante selon l'une des revendications précédentes, **caractérisée en ce que** ladite portion de réglage (65) comporte au moins un méplat.

4. Machine électrique tournante selon l'une quelconque des revendications précédentes, **caractérisée en ce que** ladite portion de réglage (65) comporte une creusure configurée pour permettre l'entraînement en rotation dudit arbre (13).

5. Machine électrique tournante selon l'une quelconque des revendications précédentes, **caractérisée en ce que** ladite portion de réglage (65) comporte un trou s'étendant transversalement par rapport audit arbre (13) apte à recevoir une goupille de forme correspondante.

6. Machine électrique tournante selon l'une quelconque des revendications précédentes, **caractérisée en ce que** ledit arbre (13) est configuré pour qu'un liquide de lubrification, tel que de l'huile puisse circuler à l'intérieur de celui-ci pour lubrifier et/ou refroidir ladite machine électrique tournante.

7. Machine électrique tournante selon l'une quelconque des revendications précédentes, **caractérisée en ce qu'**elle comporte une pluralité de canaux (76) s'étendant entre ledit stator et ledit carter (16), et **en ce que** ledit carter (16) comporte une pluralité d'ouvertures (77) débouchant chacune par une de leurs extrémités à l'extérieur de ladite machine électrique tournante (10) et par une autre de leurs extrémités dans un canal (76).

8. Ensemble **caractérisé en ce qu'**il comporte une enveloppe (21) d'un élément hôte (20) et une machine électrique tournante (10) telle que définie selon l'une quelconque des revendications précédentes insérée dans ladite enveloppe (21).

## Patentansprüche

1. Drehende elektrische Maschine (10), insbesondere für ein Kraftfahrzeug, welche aufweist:
- einen Stator (11) und einen Rotor (12), die im Inneren eines Gehäuses (16) angebracht sind,
- eine Welle (13), welche aufweist:
- an ihrem ersten Ende ein Kupplungsorgan (24), das ein Ritzel aufweist, insbesondere zur Kupplung der drehenden elektrischen Maschine (10) mit einem entsprechenden Ritzel eines aufnehmenden Elements (20), und
- an ihrem zweiten Ende einen Einstellabschnitt (65), der dazu eingerichtet ist, einen Drehantrieb der Welle (13) zu ermöglichen, insbesondere bei einem Einsetzen der drehenden elektrischen Maschine (10) in eine Hülle (21) des aufnehmenden Elements (20),
wobei das Gehäuse (16) ein Indexierungsorgan (100) aufweist, das dazu eingerichtet ist, die Winkelindexierung der drehenden elektrischen Maschine (10) in einer vorbestimmten Position bei ihrem Einsetzen in die Hülle (21) des aufnehmenden Elements (20) zu ermöglichen, das dazu bestimmt ist, mit der drehenden elektrischen Maschine (10) gekuppelt zu werden,
wobei die drehende elektrische Maschine **dadurch gekennzeichnet ist, dass** sie umfasst:
- einen Kühlkreislauf, der dazu eingerichtet ist, insbesondere das Fließen einer Schmier- und/oder Kühlflüssigkeit, zum Beispiel eines Öls, im Inneren der drehenden elektrischen Maschine (10) zu ermöglichen.

2. Drehende elektrische Maschine nach einem der vorhergehenden Ansprüche, **dadurch gekennzeichnet, dass** sich der Einstellabschnitt (65) in Bezug auf das Gehäuse (16) der Maschine vorspringend erstreckt.

3. Drehende elektrische Maschine nach einem der vorhergehenden Ansprüche, **dadurch gekennzeichnet, dass** der Einstellabschnitt (65) wenigstens eine Abflachung aufweist.

4. Drehende elektrische Maschine nach einem der vorhergehenden Ansprüche, **dadurch gekennzeichnet, dass** der Einstellabschnitt (65) eine Vertiefung aufweist, die dafür ausgelegt ist, den Drehantrieb der Welle (13) zu ermöglichen.

5. Drehende elektrische Maschine nach einem der vorhergehenden Ansprüche, **dadurch gekennzeichnet, dass** der Einstellabschnitt (65) ein sich quer bezüglich der Welle (13) erstreckendes Loch aufweist, das geeignet ist, einen Stift mit entsprechender Form aufzunehmen.

6. Drehende elektrische Maschine nach einem der vorhergehenden Ansprüche, **dadurch gekennzeichnet, dass** die Welle (13) dafür ausgelegt ist, dass eine Schmierflüssigkeit, wie etwa ein Öl, im Inneren derselben zirkulieren kann, um die drehende elektrische Maschine zu schmieren und/oder zu kühlen.

7. Drehende elektrische Maschine nach einem der vorhergehenden Ansprüche, **dadurch gekennzeichnet, dass** sie eine Vielzahl von Kanälen (76) aufweist, die sich zwischen dem Stator und dem Gehäuse (16) erstrecken, und dadurch, dass das Gehäuse (16) eine Vielzahl von Öffnungen (77) aufweist, die jeweils mit einem ihrer Enden auf der Außenseite der drehenden elektrischen Maschine (10) und mit einem anderen ihrer Enden in einen Kanal (76) münden.

8. Anordnung, **dadurch gekennzeichnet, dass** sie eine Hülle (21) eines aufnehmenden Elements (20) und eine drehende elektrische Maschine (10), wie nach einem der vorhergehenden Ansprüche definiert, die in die Hülle (21) eingesetzt ist, aufweist.

## Claims

1. Rotary electric machine (10), notably for a motor vehicle, comprising:
- a stator (11) and a rotor (12) which are mounted inside a housing (16),
- a shaft (13) comprising:
- at its first end, a coupling member (24) comprising a pinion notably for coupling said rotary electric machine (10) to a corresponding pinion of a host element (20), and
- at its second end, an adjusting portion (65) designed to allow said shaft (13) to be turned, notably on insertion of said rotary electric machine (10) in a casing (21) of said host element (20),
the housing (16) comprising an indexing member (100) designed to allow angular indexing of said rotary electric machine (10) in a predetermined position upon its insertion into said casing (21) of said host element (20) intended to be coupled to said rotary electric machine (10),
the rotary electric machine being **characterized in that** it comprises:
- a cooling circuit designed notably to allow a lubricating and/or cooling liquid, for example oil, to flow inside the rotary electric machine (10).

2. Rotary electric machine according to one of the preceding claims, **characterized in that** said adjusting portion (65) projects out from the housing (16) of the machine.

3. Rotary electric machine according to one of the preceding claims, **characterized in that** said adjusting portion (65) comprises at least one flat.

4. Rotary electric machine according to any one of the preceding claims, **characterized in that** said adjusting portion (65) has a hollow configured to allow said shaft (13) to be turned.

5. Rotary electric machine according to any one of the preceding claims, **characterized in that** said adjusting portion (65) comprises a hole extending transversely with respect to said shaft (13) and able to accept a pin of corresponding shape.

6. Rotary electric machine according to any one of the preceding claims, **characterized in that** said shaft (13) is configured so that a lubricating liquid, such as oil, can circulate inside it in order to lubricate and/or cool said rotary electric machine.

7. Rotary electric machine according to any one of the preceding claims, **characterized in that** it comprises a plurality of passages (76) extending between said stator and said housing (16), and **in that** said housing (16) comprises a plurality of openings (77) each opening via one of their ends to the outside of said rotary electric machine (10) and via another of their ends into a passage (76) .

8. Assembly **characterized in that** it comprises a casing (21) of a host element (20) and a rotary electric machine (10) as defined in any one of the preceding claims inserted inside said casing (21).
